# EUROPEAN PATENT SPECIFICATION

(11) **EP 3 373 561 B1**
(45) Date of publication and mention of the grant of the patent: **04.03.2020**
(21) Application number: 16897467.3
(22) Date of filing: 21.11.2016
(51) Int. Cl.: H04M 1/02, E05B 47/00, F16B 1/00

(54) **UNLOCKING DEVICE OF MOBILE TERMINAL, AND MOBILE TERMINAL**
ENTRIEGELUNGSVORRICHTUNG EINES MOBILEN ENDGERÄTS SOWIE MOBILES ENDGERÄT
DISPOSITIF DE DÉVERROUILLAGE D'UN TERMINAL MOBILE ET TERMINAL MOBILE

(30) Priority: 06.06.2016 CN 201610397464
(43) Date of publication of application: 12.09.2018
(73) Proprietor: HUAWEI TECHNOLOGIES CO., LTD., Guangdong 518129 (CN)
(72) Inventor: LIAO, Yi-Hsiang, Shenzhen Guangdong 518129 (CN); MA, Yanlei, Shenzhen Guangdong 518129 (CN)
(74) Representative: Körber, Martin Hans
(86) International application number: PCT/CN2016/106676
(87) International publication number: WO 2017/211049

(56) References cited:
- WO-A1-2013/144291
- CA-A1- 2 525 893
- CN-A- 101 494 672
- CN-A- 103 389 011
- CN-U- 202 750 212
- CN-U- 203 708 441
- JP-A- 2004 031 238
- US-A- 6 008 992

## Description

### TECHNICAL FIELD

The present invention relates to the field of communications technologies, and in particular, to an unlocking apparatus of a mobile terminal, and a mobile terminal.

### BACKGROUND

Currently, an unlocking apparatus of an electronic product such as a notebook computer, a mobile phone, or a wearable apparatus always uses a button pushing action for unlocking. The unlocking apparatus includes an open/close unlocking apparatus for opening a notebook computer, or a power key and a volume key of a mobile phone. The manner of performing unlocking by using a physical action is a design of implementing unlocking within small space.

To implement unlocking without a physical action, a manner used currently in the world is to drive and actuate a motor by using a current. If a motor is disposed in an electronic product, a signal may be controlled and transmitted by means of touch control or sound control to trigger the motor for implementing unlocking.

To better improve appearance competitiveness of smart band products, a main product solution used currently is as follows:

Ordinarily, Talkband may be used as a bracelet and a watch. When there is a call, a headset may be taken out and hung on an ear as a Bluetooth headset after an unlocking apparatus on both sides is pressed.

In the prior art, an unlocking apparatus including a button, a spring, and a sliding block is used.

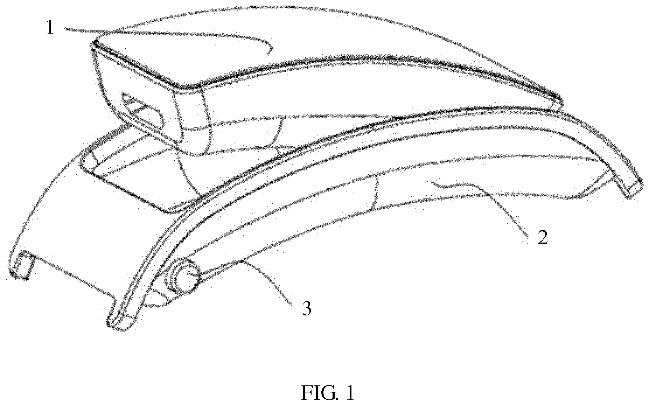

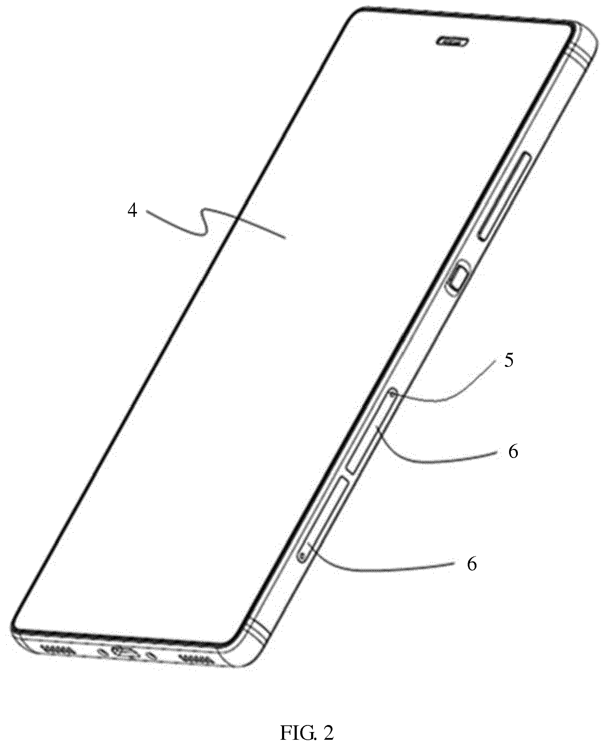

In the prior art, a button is necessarily available in an appearance design if a button structure is used to control an unlocking apparatus. In a current industry design trend of electronic products, fewer buttons mean higher simplicity and cleanliness. In addition, an unlocking structure with a button inevitably requires structures such as a spring and a sliding block, and relatively large position space has to be retained. Referring to FIG. 1 and FIG. 2, FIG. 1 shows a structure of a wearable mobile terminal. The structure includes a wristband 2 and a Bluetooth headset 1 disposed in the wristband 2, where an unlocking button 3 is provided on the wristband 2. Referring to FIG. 2, FIG. 2 shows a mobile phone. The mobile phone includes a mobile terminal body 4 and a card tray 6 inserted in the mobile terminal body 4. An unlocking button 5 is provided on the card tray 6.

In addition, for another example, a motor is added to OPPO N4, making selfie-taking easier. After a camera is started, a camera lens automatically inverts to a front facet when a finger slides down on a screen; and the camera lens inverts back when a finger slides up on the screen. The design is a part of software-based large screen optimization, and leaves one hand free, making a lens switch with one hand simpler and faster. This is a technology in which a signal is transmitted to a motor by means of touch control, so that the motor is triggered and actuated to implement unlocking.

In the prior art, driving an unlocking apparatus by using a motor can indeed avoid an appearance design with a button, but space required by the motor is larger than space required by a common button-based unlocking structure. WO 2013/144291 A1 discloses a SIM card receiver assembly in which SIM release is achieved by actuating using a shape memory alloy wire.

### SUMMARY

The present invention provides an unlocking apparatus of a mobile terminal according to independent claim 1, and a mobile terminal according to claim 8, so as to simplify an unlocking apparatus of the mobile terminal, make unlocking of the mobile terminal easier, and facilitate miniaturization of the mobile terminal.

To achieve the foregoing objective, an embodiment of the present invention provides an unlocking apparatus of a mobile terminal. The unlocking apparatus includes a circuit board, a snap-on structure, and a shape memory alloy strip. The circuit board is configured to supply power to the shape memory alloy strip, the snap-on structure is fixedly connected to the shape memory alloy strip, and after being powered on, the shape memory alloy strip deforms, so that the snap-on structure is driven to move and to be unbuckled from a card slot of a locked component, wherein a through-hole is provided on the snap-on structure, and the shape memory alloy strip is disposed in the through-hole, with both ends exposed; wherein the shape memory alloy strip is a bend structure, and the middle of the bend structure is disposed in and through the through-hole.
That is, the shape memory alloy strip passes through the snap-on structure to ensure that when the deformation memory alloy strip deforms, the snap-on structure can be driven to move in a direction of being separated from the card slot.

In the foregoing technical solution, a trigger module and the unlocking apparatus are configured to form an unlocking apparatus. The unlocking apparatus uses the shape memory alloy strip as a driving component. When powered on, the shape memory alloy strip can deform, elongate or contract, to drive the snap-on structure to move, so that the snap-on structure is separated from the card slot of the locked component, thereby implementing unlocking. In the foregoing structure, components for driving unlocking are merely the shape memory alloy strip and the circuit board supplying power to the shape memory alloy strip, greatly simplifying the entire unlocking structure. In addition, when the foregoing structure is used for unlocking, only a signal for transmitting a current to the circuit board needs to be controlled, facilitating the unlocking. Moreover, usage of the foregoing structure facilitates miniaturization of the entire mobile terminal.

In a specific implementation solution, the shape memory alloy strip is a shape memory alloy strip that is able to return to an initial state or stay in a deformed state after being powered off. During specific configurations, shape memory alloy strips with different functions may be used according to actual design requirements.

In a specific implementation solution, the shape memory alloy strip is a shape memory alloy strip that elongates or contracts after being powered on. The shape memory alloy strip may push the snap-on structure by means of deformation: elongation or contraction. It should be understood that regardless of the deformation manner, elongation or contraction, the shape memory alloy strip should ensure that the snap-on structure can be pulled out of the card slot.

When the shape memory alloy strip is powered on, a one-side powering or two-side powering manner may be used. During specific configurations, different powering manners may be selected according to different actual requirements.

During specific assembly, the unlocking apparatus further includes a base. The circuit board is fastened on the base, and metal sheets supplying power to the shape memory alloy strip are disposed on the circuit board.

In addition, the unlocking apparatus further includes an elastic component. One end of the elastic component is connected to the base, the other end is connected to the snap-on structure, and the elastic component is configured to push the snap-on structure to be inserted into the card slot. The disposed elastic component is configured to provide force for pushing the snap-on structure to be inserted into the card slot.

In a specific solution, when the shape memory alloy strip is a two-side powered shape memory alloy strip, a quantity of the metal sheets is two, and the two metal sheets are respectively a positive electrode metal sheet and a negative electrode metal sheet.

Two card slots are provided on the base, and the positive electrode metal sheet and the negative electrode metal sheet each are inserted into and fastened in one card slot. A notch for accommodating the snap-on structure is further provided on the base. The circuit board covers the notch of the base and encloses, together with the notch, space for accommodating the snap-on structure.

The present invention further provides a mobile terminal. The mobile terminal includes a housing and a locked component disposed in the housing. A card slot is provided on the locked component. The unlocking apparatus according to any one of the foregoing implementation solutions is disposed in the housing. The mobile terminal further includes a trigger module that is configured to control the unlocking apparatus to implement unlocking.

In the foregoing technical solution, the trigger module and the unlocking apparatus are configured to form an unlocking apparatus. The unlocking apparatus uses the shape memory alloy strip as a driving component. When powered on, the shape memory alloy strip can deform, elongate or contract, to drive the snap-on structure to move, so that the snap-on structure is separated from the card slot of the locked component, thereby implementing unlocking. In the foregoing structure, components for driving unlocking are merely the shape memory alloy strip and the circuit board supplying power to the shape memory alloy strip, greatly simplifying the entire unlocking structure. In addition, when the foregoing structure is used for unlocking, only a signal for transmitting a current to the circuit board needs to be controlled, facilitating the unlocking. Moreover, usage of the foregoing structure facilitates miniaturization of the entire mobile terminal.

The trigger module includes a touch control button, a sound aperture button, or a physical button, and a main circuit board that is connected to the touch control button, the sound aperture button, or the physical button. The main circuit board is configured to supply power to the circuit board after receiving touch control button, sound aperture button, or physical button triggered unlocking information. Specifically, the physical button is a power key, a volume key, or a control key on the mobile terminal.

### BRIEF DESCRIPTION OF DRAWINGS

FIG. 1 is a schematic structural diagram of a wearable mobile terminal in the prior art;
FIG. 2 is a schematic structural diagram of a mobile terminal in the prior art;
FIG. 3 is a schematic structural diagram of a wearable mobile terminal according to an embodiment of the present invention;
FIG. 4 is a schematic exploded view of a wearable mobile terminal according to an embodiment of the present invention;
FIG. 5 is a schematic exploded view of an unlocking apparatus of a wearable mobile terminal according to an embodiment of the present invention;
FIG. 6 is a schematic diagram of an unlocking apparatus in a locked state according to an embodiment of the present invention;
FIG. 7 is a schematic diagram of an unlocking apparatus in an unlocked state according to an embodiment of the present invention;
FIG. 8 is a schematic structural diagram of a mobile terminal according to an embodiment of the present invention;
FIG. 9 is a schematic exploded view of an unlocking apparatus of a mobile terminal according to an embodiment of the present invention;
FIG. 10 is a schematic diagram of a card tray, in a locked state, of a mobile terminal according to an embodiment of the present invention; and
FIG. 11 is a schematic diagram of a card tray, in an unlocked state, of a mobile terminal according to an embodiment of the present invention.

### Reference numerals:

1-Bluetooth headset 2-Wristband 3-Unlock button
4-Mobile terminal body 5- Unlock button 6-Card tray
10-Bluetooth headset 11-Touch panel 12-Fastening plate
13-Main circuit board 14-Battery 15-Enclosure
16-Card slot 20-Unlocking apparatus 21-Snap-on structure
22-Positive electrode metal sheet 23-Base 24-Negative electrode metal sheet
25-Shape memory alloy strip 26-Circuit board 27-Elastic component
30-Mobile phone 31-Touch panel 32-Middle frame 33-Main circuit board
34-SIM connector 35-SIM card tray 36-Back cover of a mobile phone
40-Unlocking apparatus 41-Snap-on structure 42-Elastic component
43-Shape memory alloy strip 44-Positive electrode metal sheet 45-Negative electrode metal sheet
46-Base

### DESCRIPTION OF EMBODIMENTS

The following describes specific embodiments of the present invention in detail with reference to the accompanying drawings. It should be understood that the specific implementations described herein are merely used to describe and explain the present invention, but not used to limit the present invention.

An embodiment of the present invention provides an unlocking apparatus of a mobile terminal. The unlocking apparatus includes a circuit board, a snap-on structure, and a shape memory alloy strip. The circuit board is configured to supply power to the shape memory alloy strip. The snap-on structure is fixedly connected to the shape memory alloy strip. After being powered on, the shape memory alloy strip deforms, so that the snap-on structure is driven to move and to be unbuckled from a card slot of a locked component.

In the foregoing embodiment, a trigger module and the unlocking apparatus are configured to form an unlocking apparatus. The unlocking apparatus uses the shape memory alloy strip as a driving component. When powered on, the shape memory alloy strip can deform, elongate or contract, to drive the snap-on structure to move, so that the snap-on structure is separated from the card slot of the locked component, thereby implementing unlocking. In the foregoing structure, components for driving unlocking are merely the shape memory alloy strip and the circuit board supplying power to the shape memory alloy strip, greatly simplifying the entire unlocking structure. In addition, when the foregoing structure is used for unlocking, only a signal for transmitting a current to the circuit board needs to be controlled, facilitating the unlocking. Moreover, usage of the foregoing structure facilitates miniaturization of the entire mobile terminal.

To facilitate understanding of the structure and an operating principle of the unlocking apparatus provided in this embodiment, the following describes the structure and the operating principle of the unlocking apparatus in detail with reference to specific embodiments.

First, it should be noted that a shape memory alloy is a martensite phase transformation alloy with regularly arranged atoms and a volume variation of less than 0.5%. The alloy deforms under the action of external force. When the external force is removed, the alloy returns to an original shape under a specific temperature condition. Being capable of restoring for more than one million times, the alloy is called "a memory alloy". In this embodiment, the shape memory alloy is powered on, so that the shape memory alloy deforms under a thermal effect.

The unlocking apparatus provided in this embodiment is mainly based on characteristics of the shape memory alloy. The unlocking apparatus includes the circuit board, and the circuit board is configured to supply power to the shape memory alloy strip. The shape memory alloy strip deforms after being powered on, and the snap-on structure is fastened on the shape memory alloy strip. The snap-on structure is configured to be buckled into the card slot of the locked component. When the shape memory alloy strip deforms, the snap-on structure is driven to move, to achieve a purpose of being buckled into the card slot or implementing unlocking.

The following describes the unlocking apparatus in detail with reference to specific embodiments.

### Embodiment 1

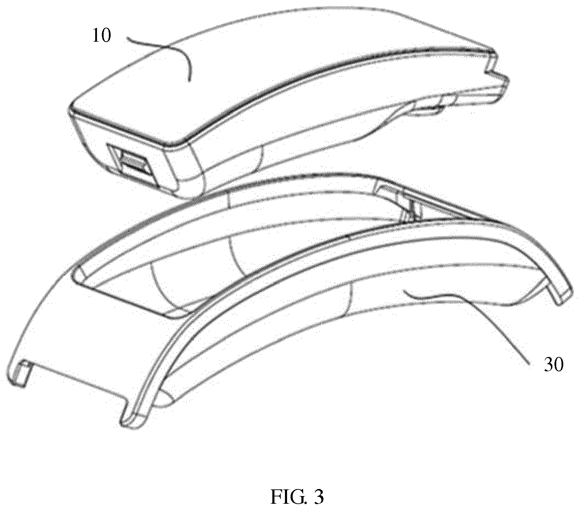

A mobile terminal provided in this embodiment is a wearable mobile terminal, such as a Bluetooth headset 10 around a wrist. Specifically, the mobile terminal provided in this embodiment includes a wristband and the Bluetooth headset 10. Referring to FIG. 3, FIG. 3 is a schematic structural diagram of the Bluetooth headset 10 and the wristband of the mobile terminal that are separated from each other. It can be learned from FIG. 3 that an accommodation slot for accommodating the Bluetooth headset 10 is provided on the wristband. When the Bluetooth headset 10 is not used, the Bluetooth headset 10 is placed into the accommodation slot and locked. A locking structure used is the locking structure provided in this embodiment, that is, an unlocking apparatus 20 provided in this embodiment is disposed in the Bluetooth headset 10, and a card slot 16 fitted to the unlocking apparatus 20 is disposed in the corresponding wristband.

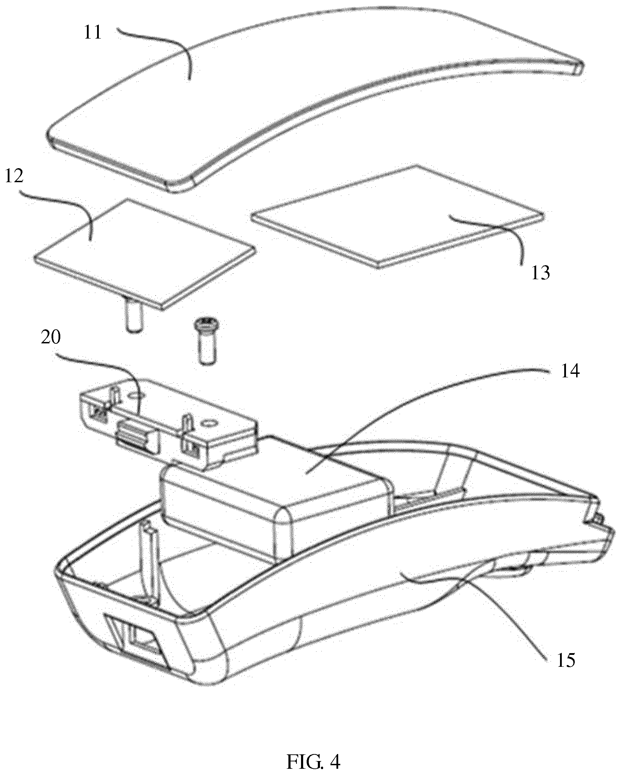

Also referring to FIG. 4, FIG. 4 is a schematic exploded view of the mobile device provided in this embodiment. The wearable structure includes a housing, and a battery 14, an unlocking apparatus 20, a main circuit board 13, a fastening plate 12, and a touch panel 11 that are disposed in the housing. The fastening plate 12 is configured to fasten the unlocking apparatus 20 in the housing, so that a relative position between the housing and the unlocking apparatus 20 is fixed. The main circuit board 13 is connected to the touch panel 11 and the unlocking apparatus 20 by means of a signal, and is configured to send, when the touch panel 11 receives an unlocking signal, the signal to the unlocking apparatus 20 for unlocking.

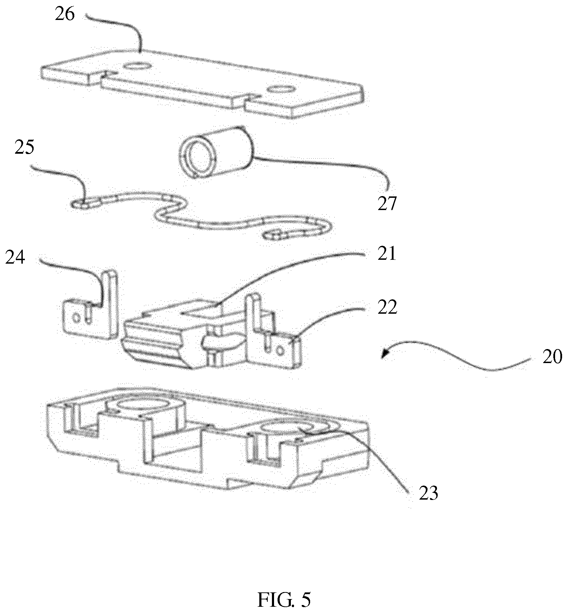

Also referring to FIG. 5, FIG. 5 is a schematic exploded view of the unlocking apparatus 20. The unlocking apparatus 20 provided in this embodiment includes a base 23, a shape memory alloy strip 25, a snap-on structure 21, an elastic component 27, a positive electrode metal sheet 22, a negative electrode metal sheet 24, and a circuit board 26. During a specific connection, the base 23 serves as a bearer component, and a structure for accommodating and fastening the shape memory alloy strip 25, the snap-on structure 21, the elastic component 27, the positive electrode metal sheet 22, the negative electrode metal sheet 24, and the circuit board 26 is provided on the base 23. Specifically, as shown in FIG. 5, a notch is provided in the middle of the base 23 in this embodiment, and the notch is configured to accommodate the snap-on structure 21. During assembly, the circuit board 26 covers the top of the notch to form a stable support structure. The snap-on structure 21 is located in the notch, and is restricted by the base 23 and the circuit board 26 to move only in a horizontal direction (a placement direction of the structure shown in FIG. 5 is used as an example).

In a specific implementation solution, the shape memory alloy strip 25 is a shape memory alloy strip 25 that is able to return to an initial state or stay in a deformed state after being powered off. During specific configurations, shape memory alloy strips 25 with different functions may be used according to actual design requirements. That is, in actual usage, the shape memory alloy strip 25 that returns to the initial state or stays in the deformed state after being powered off may be used. In this embodiment, a description is provided by using the shape memory alloy strip 25 that returns to the initial state after being powered off as an example.

In addition, there are two cases for the shape memory alloy strip 25: the shape memory alloy strip 25 elongates after being powered on, or the shape memory alloy strip 25 contracts after being powered on. When the shape memory alloy strip 25 that elongates after being powered on is used, the elongation of the shape memory alloy strip 25 should drive the snap-on structure 21 to move backward. Similarly, when the shape memory alloy strip 25 that contracts after being powered on is used, the shape memory alloy strip 25 should be able to be driven to move backward during contraction of the shape memory alloy strip 25. That is, regardless of a type of the shape memory alloy strip 25 used, the snap-on structure 21 should be able to be controlled to move backward after being powered on, so as to implement unlocking.

Specifically, when the shape memory alloy strip 25 is powered on, the shape memory alloy strip 25 is a one-side or two-side powered shape memory alloy strip 25. That is, either a one-side powering manner or a two-side powering manner may be used. Specifically, when the shape memory alloy strip 25 is powered on, different powering manners may be selected according to different actual requirements. In this embodiment, a description is provided by using the two-side powered shape memory alloy strip 25 as an example.

When the shape memory alloy strip 25 is connected to the snap-on structure 21, a through-hole is provided on the snap-on structure 21, and the shape memory alloy strip 25 is disposed in the through-hole, with both ends exposed. That is, the shape memory alloy strip 25 passes through the snap-on structure 21 to ensure that when the deformation memory alloy strip deforms, the snap-on structure 21 can be driven to move in a direction of being separated from the card slot 16. As shown in FIG. 5, the shape memory alloy strip 25 is a bend structure similar to a W-shaped structure. The bend structure in the middle is disposed in and through the through-hole of the shape memory alloy strip 25, and metal sheets supplying power to the shape memory alloy strip 25 are separately disposed on ends that are outside the through-hole and that are on the circuit board 26.

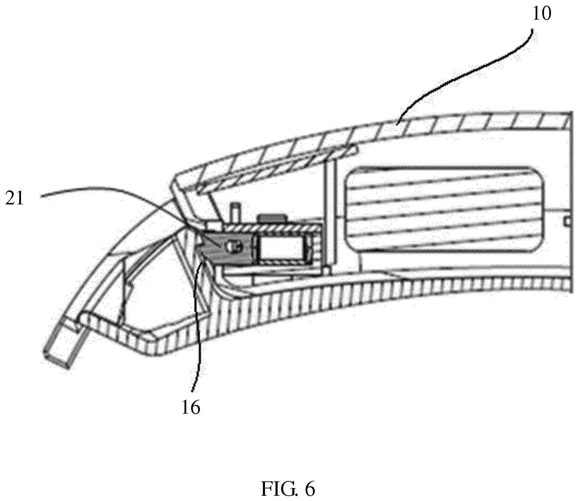

When the shape memory alloy strip 25 is a two-side powered shape memory alloy strip 25, a quantity of the metal sheets is two and the two metal sheets are the positive electrode metal sheet 22 and the negative electrode metal sheet 24. During specific assembly, as shown in FIG. 6, two card slots 16 are provided on the base 23, and the positive electrode metal sheet 22 and the negative electrode metal sheet 24 each are inserted into and fastened in one card slot 16. The two card slots 16 are on both sides of the notch, and two ends of the shape memory alloy strip 25 exposed outside the two ends of the snap-on structure 21 are connected to the positive electrode metal sheet 22 and the negative electrode metal sheet 24 respectively.

In addition, the unlocking apparatus further includes the elastic component 27. One end of the elastic component 27 is connected to the base 23, the other end is connected to the snap-on structure 21, and the elastic component 27 is configured to push the snap-on structure 21 to be inserted into the card slot 16. The disposed elastic component 27 is configured to provide force for pushing the snap-on structure 21 to be inserted into the card slot 16. Specifically, the elastic component 27 may be an elastic component 27 that can provide elasticity when pressed, such as a compression spring, a torsion spring, or an elastic rubber. The compression spring is used as an example. As shown in FIG. 5, during configuration, a groove for accommodating the elastic component 27 is provided on the snap-on structure 21. The elastic component 27 is placed on the groove, and one end is exposed and pressed against the base 23. When the snap-on structure 21 moves backward, the compression spring is compressed. After being powered off, the compression spring provides force for pushing the snap-on structure 21 to return to an initial position, to ensure that the snap-on structure 21 can be locked in the housing 15 of the mobile terminal.

The trigger module includes a touch control button, a sound aperture button, or a physical button, and the main circuit board 13 that is connected to the touch control button, the sound aperture button, or the physical button. The main circuit board 13 is configured to supply power to the circuit board 26 after receiving touch control button, sound aperture button, or physical button triggered unlocking information. Specifically, the physical button is a power key, a volume key, or a control key on the mobile terminal.

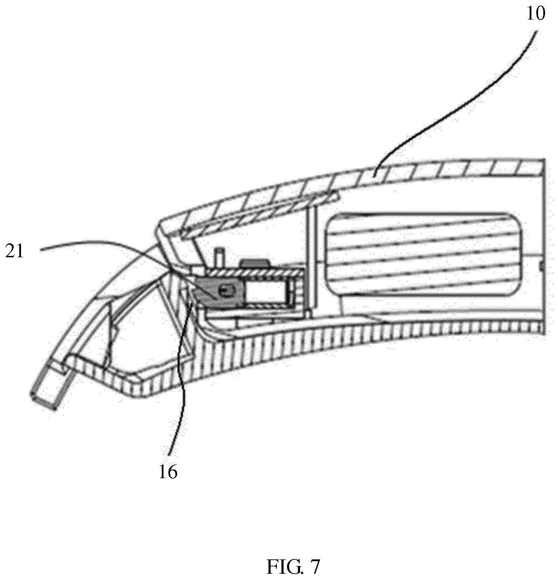

Also referring to FIG. 6 and FIG. 7, FIG. 6 and FIG. 7 are reference diagrams of usage states of the unlocking apparatus 20 provided in this embodiment. FIG. 6 is a reference diagram of the unlocking apparatus in a locked state, and FIG. 7 is a reference diagram of the unlocking apparatus in an unlocked state.

As shown in FIG. 6, before an unlocking signal sent by the trigger module is received, the shape memory alloy strip 25 is in a natural state. In this case, the snap-on structure 21 is buckled into the card slot 16 of the wristband under the push of the compression spring, and the Bluetooth headset 10 is locked. During unlocking, as shown in FIG. 7, when a user triggers a switch by touching a touchpad or by means of sound control, the main circuit board 13 transmits a signal to the circuit board 26 of the unlocking apparatus. The circuit board 26 applies a current to the positive electrode metal sheet 22 and the negative electrode metal sheet 24. After receiving signals sent by a positive electrode and a negative electrode, the shape memory alloy strip contracts to drive the snap-on structure 21 to move backward, so as to implement unlocking.

### Embodiment 2

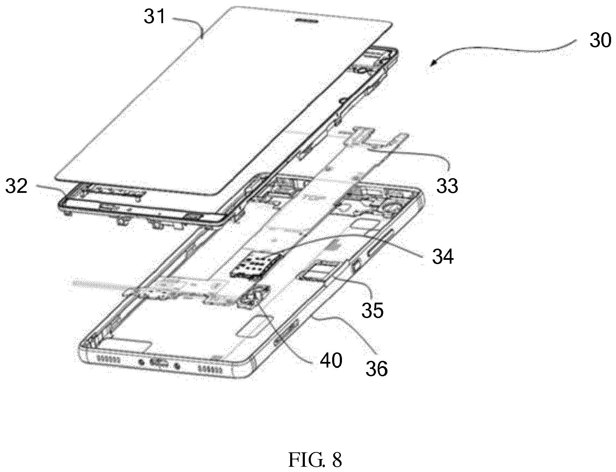

An unlocking apparatus 40 provided in this embodiment is an unlocking apparatus 40 on a card tray 35, and a mobile terminal to which the unlocking apparatus 40 is applied is a mobile phone 30, a tablet computer or any other structure using the card tray 35. In this embodiment, the mobile terminal is the mobile phone 30. Specifically, as shown in FIG. 8, the mobile phone 30 includes a touch panel 31, a middle frame 32, a main circuit board 33, an SIM connector 34, an SIM card tray 35, a back cover 36 of the mobile phone 30, and the unlocking apparatus. The unlocking apparatus 40 is disposed and fastened on the middle frame 32. The main circuit board 33 is connected to the unlocking apparatus 40 and the touch panel 31, and is configured to receive an unlocking signal sent by the touch panel 31 or another unlocking module, and control the unlocking apparatus 40 to implement unlocking. In addition, other components are connected in a same manner as that used in the prior art, and details are not described again herein.

A difference between a structure of the unlocking apparatus 40 in this embodiment and the structure of the unlocking apparatus in Embodiment 1 is as follows: in Embodiment 1, the unlocking structure is disposed on a Bluetooth headset and a card slot is disposed on a wristband; while in this embodiment, the unlocking apparatus 40 is disposed on the middle frame 32 and the card slot is disposed on the SIM card tray 35.

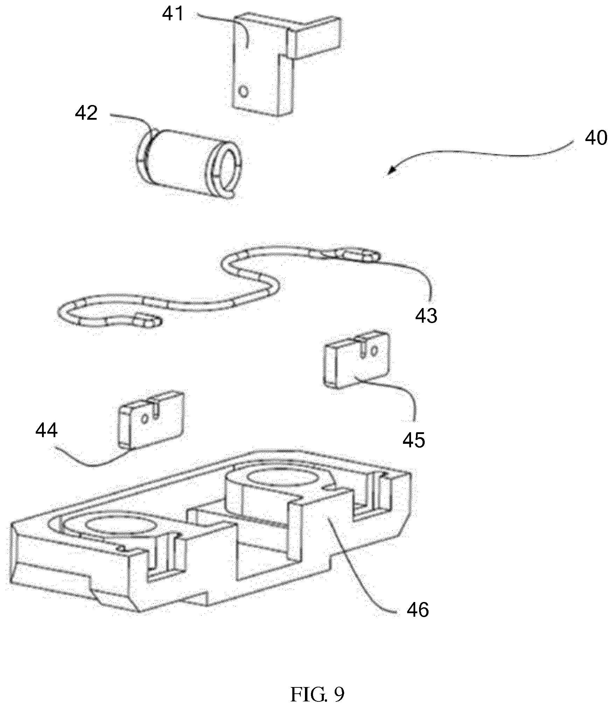

Also referring to FIG. 9, FIG. 9 is an exploded schematic diagram of the unlocking apparatus 40. The unlocking apparatus 40 provided in this embodiment includes a base 46, a shape memory alloy strip 43, a snap-on structure 41, an elastic component 42, a positive electrode metal sheet 44, a negative electrode metal sheet 45, and a circuit board (not shown in the figure). During a specific connection, the base 46 serves as a bearer component, and a structure for accommodating and fastening the shape memory alloy strip 43, the snap-on structure 41, the elastic component 42, the positive electrode metal sheet 44, the negative electrode metal sheet 45, and the circuit board is provided on the base 46. Specifically, as shown in FIG. 9, a notch is provided in the middle of the base 46 in this embodiment, and the notch is configured to accommodate the snap-on structure 41. During assembly, the circuit board covers the top of the notch to form a stable support structure. The snap-on structure 41 is located in the notch, and is restricted by the base 46 and the circuit board to move only in a horizontal direction (a placement direction of the structure shown in FIG. 9 is used as an example). Structures and principles of the shape memory alloy strip 43, the snap-on structure 41, the elastic component 42, the positive electrode metal sheet 44, the negative electrode metal sheet 45, and the circuit board are same as the structures and principles in Embodiment 1, and details are not described herein again.

The trigger module includes a touch control button, a sound aperture button, or a physical button, and the main circuit board 33 that is connected to the touch control button, the sound aperture button, or the physical button. The main circuit board 33 is configured to supply power to the circuit board after receiving touch control button, sound aperture button, or physical button triggered unlocking information. Specifically, the physical button is a power key, a volume key, or a control key on the mobile terminal.

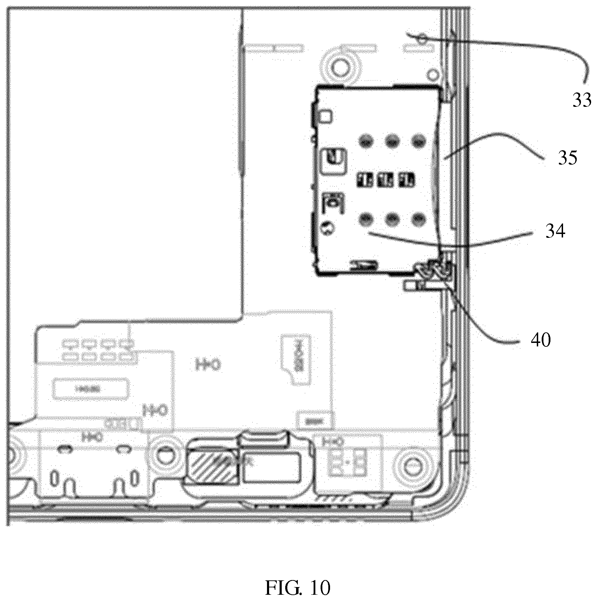

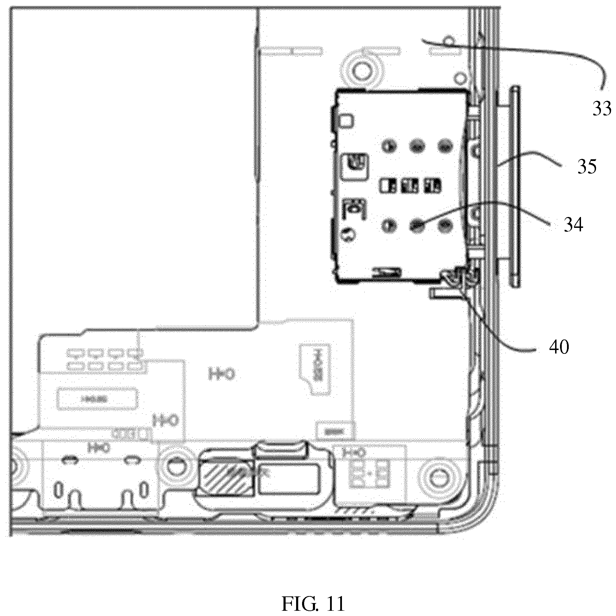

Also referring to FIG. 10 and FIG. 11, FIG. 10 and FIG. 11 are reference diagrams of usage states of the unlocking apparatus 40 provided in this embodiment. FIG. 10 is a reference diagram of the unlocking apparatus in a locked state, and FIG. 11 is a reference diagram of the unlocking apparatus in an unlocked state.

As shown in FIG. 10, before an unlocking signal sent by the trigger module is received, the shape memory alloy strip 43 is in a natural state. In this case, the snap-on structure 41 is buckled into the card slot of the SIM card tray 35 under the push of a compression spring, and the SIM card tray 35 is locked. During unlocking, as shown in FIG.11, when a user triggers a switch by touching a touchpad or by means of sound control, the main circuit board 33 transmits a signal to the circuit board of the unlocking apparatus. The circuit board applies a current to the positive electrode metal sheet 44 and the negative electrode metal sheet 45. After receiving signals sent by a positive electrode and a negative electrode, the shape memory alloy contracts to drive the snap-on structure 41 to move backward, so as to implement unlocking.

It can be learned from specific descriptions of Embodiment 1 and Embodiment 2, the unlocking apparatus 40 in this embodiment uses the trigger module and the unlocking apparatus. The unlocking apparatus uses the shape memory alloy strip 43 as a driving component. When powered on, the shape memory alloy strip 43 can deform, elongate or contract, to drive the snap-on structure 41 to move, so that the snap-on structure 41 is separated from the card slot of the locked component, thereby implementing unlocking. In the foregoing structure, components for driving unlocking are merely the shape memory alloy strip 43 and the circuit board supplying power to the shape memory alloy strip 43, greatly simplifying the entire unlocking structure. In addition, when the foregoing structure is used for unlocking, only a signal for transmitting a current to the circuit board needs to be controlled, facilitating the unlocking. Moreover, usage of the foregoing structure facilitates miniaturization of the entire mobile terminal.

In addition, an embodiment of the present invention further provides a mobile terminal. The mobile terminal includes a housing and a locked component disposed in the housing. A card slot is provided on the locked component. The unlocking apparatus according to any one of the foregoing embodiments is disposed in the housing. The mobile terminal further includes a trigger module that is configured to control the unlocking apparatus to implement unlocking.

The mobile terminal may be a wearable mobile terminal or another mobile terminal such as a mobile phone or a tablet computer. In addition, with reference to Embodiment 1 and Embodiment 2, it can be learned that the unlocking apparatus provided in this embodiment uses the trigger module and an unlocking apparatus, and the unlocking apparatus uses a shape memory alloy strip as a driving component. When powered on, the shape memory alloy strip can deform, elongate or contract, to drive a snap-on structure to move, so that the snap-on structure is separated from the card slot of the locked component, thereby implementing unlocking. In the foregoing structure, components for driving unlocking are merely the shape memory alloy strip and a circuit board supplying power to the shape memory alloy strip, greatly simplifying the entire unlocking structure. In addition, when the foregoing structure is used for unlocking, only a signal for transmitting a current to the circuit board needs to be controlled, facilitating the unlocking. Moreover, usage of the foregoing structure facilitates miniaturization of the entire mobile terminal.

The trigger module includes a touch control button, a sound aperture button, or a physical button, and a main circuit board that is connected to the touch control button, the sound aperture button, or the physical button. The main circuit board is configured to supply power to the circuit board after receiving touch control button, sound aperture button, or physical button triggered unlocking information. Specifically, the physical button is a power key, a volume key, or a control key on the mobile terminal.

Obviously, a person skilled in the art can make various modifications and variations to the present invention without departing from the scope of the present invention. The present invention is intended to cover these modifications and variations provided that they fall within the scope of protection defined by the following claims.

## Claims

1. An unlocking apparatus (20, 40) suitable for a mobile terminal, comprising a circuit board (26), a snap-on structure (21, 41), and a shape memory alloy strip (25, 43), wherein the circuit board (26) is configured to supply power to the shape memory alloy strip (25, 43), the snap-on structure (21, 41) is fixedly connected to the shape memory alloy strip (25, 43), and after being powered on, the shape memory alloy strip (25, 43) deforms, so that the snap-on structure (21, 41) is driven to move and to be unbuckled from a card slot (16) of a locked component, **characterised in that** a through-hole is provided on the snap-on structure (21, 41), and the shape memory alloy strip (25, 43) is disposed in the through-hole with exposed ends; wherein the shape memory alloy strip (25, 43) is a bend structure, and the middle of the bend structure is disposed in and through the through-hole.

2. The unlocking apparatus (20, 40) of the mobile terminal according to claim 1, wherein the shape memory alloy strip (25, 43) is a shape memory alloy strip that is able to return to an initial state or stay in a deformed state after being powered off.

3. The unlocking apparatus (20, 40) of the mobile terminal according to claim 1 or 2, wherein the shape memory alloy strip (25, 43) is a shape memory alloy strip that elongates or contracts after being powered on.

4. The unlocking apparatus (20, 40) of the mobile terminal according to any one of claims 1 to 3, wherein the shape memory alloy strip (25, 43) is a one-side or two-side powered shape memory alloy strip.

5. The unlocking apparatus (20, 40) of the mobile terminal according to any one of claims 1 to 4, wherein the unlocking apparatus (20, 40) further comprises a base (23, 46), the circuit board (26) is fastened on the base (23, 46), and metal sheets supplying power to the shape memory alloy strip (25, 43) are separately disposed on the circuit board (26).

6. The unlocking apparatus (20, 40) of the mobile terminal according to claim 5, wherein the unlocking apparatus (20, 40) further comprises an elastic component (27, 42), one end of the elastic component (27, 42) is connected to the base (23, 46), the other end is connected to the snap-on structure (21, 41), and the elastic component (27, 42) is configured to push the snap-on structure (21, 41) to be inserted into the card slot (16).

7. The unlocking apparatus (20, 40) of the mobile terminal according to claim 5 or 6, wherein when the shape memory alloy strip (25, 43) is a two-side powered shape memory alloy strip, a quantity of the metal sheets is two, and the two metal sheets are respectively a positive electrode metal sheet (22, 44) and a negative electrode metal sheet (24, 45);
two card slots are provided on the base (23, 46), the positive electrode metal sheet (22, 44) and the negative electrode metal sheet (24, 45) each are inserted into and fastened in one card slot; and a notch for accommodating the snap-on structure (21, 41); is further provided on the base (23, 46), and the circuit board (26) covers the notch of the base (23, 46) and encloses, together with the notch, space for accommodating the snap-on structure.

8. A mobile terminal (30), comprising an enclosure and a locked component disposed in the enclosure, wherein a card slot is provided on the locked component, an unlocking apparatus (40) according to any one of claims 1 to 8 is disposed in the enclosure, and the mobile terminal (30) further comprises a trigger module that is configured to control the unlocking apparatus (40) to implement unlocking.

9. The mobile terminal (30) according to claim 8, wherein the trigger module comprises a touch control button, a sound aperture button, or a physical button, and a main circuit board (33) that is connected to the touch control button, the sound aperture button, or the physical button, and the main circuit board is configured to supply power to the circuit board after receiving touch control button, sound aperture button, or physical button triggered unlocking information.

10. The mobile terminal (30) according to claim 9, wherein the physical button is a power key, a volume key, or a control key on the mobile terminal.

## Patentansprüche

1. Entriegelungsvorrichtung (20, 40) geeignet für ein mobiles Endgerät, eine Leiterplatte (26), eine Einraststruktur (21, 41) und einen Formgedächtnislegierungsstreifen (25, 43) aufweisend, wobei die Leiterplatte (26) dazu ausgebildet ist, Strom zu dem Formgedächtnislegierungsstreifen (25, 43) zuzuführen, die Einraststruktur (21, 41) fest mit dem Formgedächtnislegierungsstreifen (25, 43) verbunden ist und sich der Formgedächtnislegierungsstreifen (25, 43), nach dem Einschalten, so verformt, dass die Einraststruktur (21, 41) angetrieben wird, um sich zu bewegen und aus einem Kartenschlitz (16) einer verriegelten Komponente gelöst zu werden, **dadurch gekennzeichnet, dass**
ein Durchgangsloch auf der Einraststruktur (21, 41) vorgesehen ist und der Formgedächtnislegierungsstreifen (25, 43) in dem Durchgangsloch mit freiliegenden Enden angeordnet ist; wobei der Formgedächtnislegierungsstreifen (25, 43) eine gebogene Struktur ist und die Mitte der gebogenen Struktur in und durch das Durchgangsloch angeordnet ist.

2. Entriegelungsvorrichtung (20, 40) des mobilen Endgeräts nach Anspruch 1, wobei der Formgedächtnislegierungsstreifen (25, 43) ein Formgedächtnislegierungsstreifen ist, der in der Lage ist, nach dem Ausschalten zu einem anfänglichen Zustand zurückzukehren oder in einem verformten Zustand zu bleiben.

3. Entriegelungsvorrichtung (20, 40) des mobilen Endgeräts nach Anspruch 1 oder 2, wobei der Formgedächtnislegierungsstreifen (25, 43) ein Formgedächtnislegierungsstreifen ist, der sich nach dem Einschalten verlängert oder zusammenzieht.

4. Entriegelungsvorrichtung (20, 40) des mobilen Endgeräts nach einem der Ansprüche 1 bis 3, wobei der Formgedächtnislegierungsstreifen (25, 43) ein einseitig oder zweiseitig angesteuerter Formgedächtnislegierungsstreifen ist.

5. Entriegelungsvorrichtung (20, 40) des mobilen Endgeräts nach einem der Ansprüche 1 bis 4, wobei die Entriegelungsvorrichtung (20, 40) ferner eine Basis (23, 46) aufweist, die Leiterplatte (26) an der Basis (23, 46) befestigt ist und Bleche, die Strom zu dem Formgedächtnislegierungsstreifen (25, 43) zuführen, getrennt auf der Leiterplatte (26) angeordnet sind.

6. Entriegelungsvorrichtung (20, 40) des mobilen Endgeräts nach Anspruch 5, wobei die Entriegelungsvorrichtung (20, 40) ferner eine elastische Komponente (27, 42) aufweist, ein Ende der elastischen Komponente (27, 42) mit der Basis (23, 46) verbunden ist, das andere Ende mit der Einraststruktur (21, 41) verbunden ist und die elastische Komponente (27, 42) dazu ausgebildet ist, die Einraststruktur (21, 41) zu drücken, um in den Kartenschlitz (16) eingeführt zu werden.

7. Entriegelungsvorrichtung (20, 40) des mobilen Endgeräts nach Anspruch 5 oder 6, wobei, wenn der Formgedächtnislegierungsstreifen (25, 43) ein zweiseitig angesteuerter Formgedächtnislegierungsstreifen ist, eine Anzahl von Blechen zwei ist, und die zwei Bleche ein positives Elektrodenblech (22, 44) bzw. ein negatives Elektrodenblech (24, 45) sind;
wobei zwei Kartenschlitze an der Basis (23, 46) vorgesehen sind, wobei das positive Elektrodenblech (22, 44) und das negative Elektrodenblech (24, 45) jeweils in einen Kartenschlitz eingesetzt und darin befestigt werden; und wobei eine Kerbe zum Aufnehmen der Einraststruktur (21, 41) ferner an der Basis (23, 46) vorgesehen ist und die Leiterplatte (26) die Kerbe der Basis (23, 46) abdeckt und, zusammen mit der Kerbe, Raum zum Aufnehmen der Einraststruktur umschließt.

8. Mobiles Endgerät (30), ein Gehäuse und eine im Gehäuse angeordnete verriegelte Komponente aufweisend, wobei ein Kartenschlitz an der verriegelten Komponente vorgesehen ist, eine Entriegelungsvorrichtung (40) nach einem der Ansprüche 1 bis 8, im Gehäuse angeordnet ist und das mobile Endgerät (30) ferner ein Auslösemodul aufweist, das dazu ausgebildet ist, die Entriegelungsvorrichtung (40) zu steuern, um eine Entriegelung umzusetzen.

9. Mobiles Endgerät (30) nach Anspruch 8, wobei das Auslösemodul eine Berührungssteuerungstaste, eine Schallöffnungstaste oder eine physische Taste, und eine Hauptleiterplatte (33) aufweist, die mit der Berührungssteuerungstaste, der Schallöffnungstaste oder der physischen Taste verbunden ist, und wobei die Hauptleiterplatte dazu ausgebildet ist, nach Empfangen der durch Berührungssteuerungstaste, Schallöffnungstaste oder physische Taste ausgelösten Entriegelungsinformationen Strom zur Leiterplatte zuzuführen.

10. Mobiles Endgerät (30) nach Anspruch 9, wobei die physische Taste eine Ein/Aus-Taste, eine Lautstärketaste oder eine Steuertaste auf dem mobilen Endgerät ist.

## Revendications

1. Appareil de déverrouillage (20, 40) approprié pour un terminal mobile, comprenant une carte de circuit imprimé (26), une structure encliquetable (21, 41) et une bande en alliage à mémoire de forme (25, 43), la carte de circuit imprimé (26) étant configurée pour alimenter en courant la bande en alliage à mémoire de forme (25, 43), la structure encliquetable (21, 41) étant reliée de manière fixe à la bande en alliage à mémoire de forme (25, 43), et après avoir été mise sous tension, la bande en alliage à mémoire de forme (25, 43) se déformant, de sorte que la structure encliquetable (21, 41) est entraînée pour se déplacer et se dégager d'une fente pour carte (16) d'un composant verrouillé, **caractérisé en ce que**
un trou traversant est prévu sur la structure encliquetable (21, 41), et la bande en alliage à mémoire de forme (25, 43) est disposée dans le trou traversant avec des extrémités exposées ; la bande en alliage à mémoire de forme (25, 43) étant une structure courbée, et le milieu de la structure courbée étant disposé dans et à travers le trou traversant.

2. Appareil de déverrouillage (20, 40) du terminal mobile selon la revendication 1, la bande en alliage à mémoire de forme (25, 43) étant une bande en alliage à mémoire de forme qui peut revenir dans un état initial ou rester dans un état déformé après avoir été mise hors tension.

3. Appareil de déverrouillage (20, 40) du terminal mobile selon la revendication 1 ou 2, la bande en alliage à mémoire de forme (25, 43) étant une bande en alliage à mémoire de forme qui s'allonge ou se contracte après avoir été mise sous tension.

4. Appareil de déverrouillage (20, 40) du terminal mobile selon l'une quelconque des revendications 1 à 3, la bande en alliage à mémoire de forme (25, 43) étant une bande en alliage à mémoire de forme alimentée sur un côté ou sur deux côtés.

5. Appareil de déverrouillage (20, 40) du terminal mobile selon l'une quelconque des revendications 1 à 4, le Appareil de déverrouillage (20, 40) comprenant en outre une base (23, 46), la carte de circuit imprimé (26) étant fixée sur la base (23, 46), et des feuilles métalliques alimentant la bande en alliage à mémoire de forme (25, 43) étant disposées séparément sur la carte de circuit imprimé (26).

6. Appareil de déverrouillage (20, 40) du terminal mobile selon la revendication 5, le appareil de déverrouillage (20, 40) comprenant en outre un composant élastique (27, 42), une extrémité du composant élastique (27, 42) étant reliée à la base (23, 46), l'autre extrémité étant reliée à la structure encliquetable (21, 41) et le composant élastique (27, 42) étant configuré pour pousser la structure encliquetable (21, 41) devant être insérée dans la fente pour carte (16).

7. Appareil de déverrouillage (20, 40) du terminal mobile selon la revendication 5 ou 6, lorsque la bande en alliage à mémoire de forme (25, 43) est une bande en alliage à mémoire de forme alimentée sur deux côtés, une quantité des feuilles métalliques étant deux, et les deux feuilles métalliques étant respectivement une feuille métallique à électrode positive (22, 44) et une feuille métallique à électrode négative (24, 45) ; deux fentes pour carte étant prévues sur la base (23, 46), la feuille métallique à électrode positive (22, 44) et la feuille métallique à électrode négative (24, 45) étant chacune insérée dans et fixée dans une fente pour carte ; et une encoche, pour recevoir la structure encliquetable (21, 41), étant en outre prévue sur la base (23, 46), et la carte de circuit imprimé (26) recouvrant l'encoche de la base (23, 46) et enveloppant, avec l'encoche, un espace pour recevoir la structure encliquetable.

8. Terminal mobile (30), comprenant un boîtier et un composant verrouillé disposé dans le boîtier, une fente pour carte étant prévue sur le composant verrouillé, un Appareil de déverrouillage (40) selon l'une quelconque des revendications 1 à 8 étant disposé dans le boîtier, et le terminal mobile (30) comprenant en outre un module de déclenchement qui est configuré pour commander l'appareil de déverrouillage (40) pour réaliser le déverrouillage.

9. Terminal mobile (30) selon la revendication 8, le module de déclenchement comprenant un bouton de commande tactile, un bouton d'ouverture sonore ou un bouton physique, et une carte de circuit imprimé principal (33) qui est connectée au bouton de commande tactile, au bouton d'ouverture sonore ou au bouton physique, et la carte de circuit imprimé principal étant configurée pour alimenter en courant la carte de circuit imprimé après la réception d'informations de déverrouillage déclenché par bouton de commande tactile, par bouton d'ouverture sonore ou par bouton physique.

10. Terminal mobile (30) selon la revendication 9, le bouton physique étant une touche d'alimentation, une touche de volume ou une touche de commande sur le terminal mobile.
